(19) Europäisches Patentamt / European Patent Office / Office européen des brevets

(11) **EP 3 060 939 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(21) Anmeldenummer: **14795969.6**

(22) Anmeldetag: **17.10.2014**

(51) Int Cl.:
**G01S 13/28** (2006.01)    **G01S 13/90** (2006.01)

(86) Internationale Anmeldenummer:
**PCT/EP2014/072297**

(87) Internationale Veröffentlichungsnummer:
**WO 2015/059043 (30.04.2015 Gazette 2015/17)**

(54) **SYNTHETIK-APERTUR-RADARVERFAHREN**

SYNTHETIC APERTURE RADAR METHOD

PROCÉDÉ RADAR À SYNTHÈSE D'OUVERTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2013 DE 102013221756**

(43) Veröffentlichungstag der Anmeldung:
**31.08.2016 Patentblatt 2016/35**

(73) Patentinhaber: **Deutsches Zentrum für Luft- und Raumfahrt e.V.
51147 Köln (DE)**

(72) Erfinder:
• **YOUNIS, Marwan
  82234 Weßling (DE)**
• **BORDONI, Federica
  80689 München (DE)**
• **KRIEGER, Gerhard
  82131 Gauting (DE)**
• **LOPEZ-DEKKER, Francisco
  2623 AS Delft (NL)**
• **DE ZAN, Francesco
  80687 München (DE)**

(74) Vertreter: **Fink Numrich
Patentanwälte PartmbB
Patentanwälte
European Patent and Trademark Attorneys
Wendl-Dietrich-Straße 14
80634 München (DE)**

(56) Entgegenhaltungen:

CN-A- 102 540 187    US-A- 5 745 069
US-A- 5 808 580

• WEI XU ET AL: "MIMO-TOPS MODE FOR HIGH-RESOLUTION ULTRA-WIDE-SWATH FULL POLARIMETRIC IMAGING", PROGRESS IN ELECTROMAGNETICS RESEARCH, Bd. 121, 1. Januar 2011 (2011-01-01), Seiten 19-37, XP055131028, DOI: 10.2528/PIER11030209
• BO ZOU ET AL: "Design and performance analysis of orthogonal coding signal in MIMO-SAR", SCIENCE CHINA INFORMATION SCIENCES, SP SCIENCE CHINA PRESS, HEIDELBERG, Bd. 54, Nr. 8, 3. Juni 2011 (2011-06-03), Seiten 1723-1737, XP019930955, ISSN: 1869-1919, DOI: 10.1007/S11432-011-4284-X
• GERHARD KRIEGER ET AL: "Multidimensional Waveform Encoding: A New Digital Beamforming Technique for Synthetic Aperture Radar Remote Sensing", IEEE TRANSACTIONS ON GEOSCIENCE AND REMOTE SENSING, IEEE SERVICE CENTER, PISCATAWAY, NJ, US, Bd. 46, Nr. 1, 1. Januar 2008 (2008-01-01), Seiten 31-46, XP011198512, ISSN: 0196-2892, DOI: 10.1109/TGRS.2007.905974
• KRIEGER G ET AL: "MIMO-SAR and the orthogonality confusion", GEOSCIENCE AND REMOTE SENSING SYMPOSIUM (IGARSS), 2012 IEEE INTERNATIONAL, IEEE, 22. Juli 2012 (2012-07-22), Seiten 1533-1536, XP032469052, DOI: 10.1109/IGARSS.2012.6351242 ISBN: 978-1-4673-1160-1

EP 3 060 939 B1

**Beschreibung**

Die Erfindung betrifft ein Synthetik-Apertur-Radarverfahren zur Fernerkundung der Erdoberfläche sowie ein entsprechendes Synthetik-Apertur-Radarsystem.

Synthetik-Apertur-Radarverfahren, welche auch als SAR-Verfahren bezeichnet werden, ermöglichen die Fernerkundung der Erdoberfläche über die Erfassung von an der Erdoberfläche reflektierten Radarpulsen, die von einer Radareinrichtung ausgesendet werden, welche sich mit konstanter Geschwindigkeit über der Erdoberfläche in einer sog. Azimut-Richtung bewegt. Dabei werden von der Erdoberfläche Streifen mit einer Breite in der sog. Range-Richtung erfasst, welche sich senkrecht zur Azimut-Richtung erstreckt. Der Begriff der Erdoberfläche ist dabei weit zu verstehen und kann gegebenenfalls auch die Oberfläche eines anderen Planeten als der Erde betreffen.

Bei SAR-Radarverfahren macht man sich die Erkenntnis zunutze, dass aufgrund des bewegten Radarsystems die gleichen Bereiche der Erde bzw. eines Planeten aus unterschiedlichen Sensorpositionen erfasst werden, wodurch eine Amplituden- und Phaseninformation und schließlich ein Radarbild der Erdoberfläche erhalten werden kann. Es wird somit eine synthetische Apertur in Azimut-Richtung erzeugt.

Für SAR-Systeme ist der sog. Subpuls-Betriebsmodus bekannt, bei dem in aufeinander folgenden Pulswiederholintervallen nicht ein einzelner Radarpuls, sondern mehrere Subpulse ausgesendet werden. Die Subpulse können dabei gleichzeitig, überlappend oder in kurzen Zeitabständen gesendet werden. Jeder dieser Subpulse kann einen unterschiedlichen Bodenstreifen erfassen (sog. Breitstreifenmodus). Ebenso können mehrere Subpulse einen gemeinsamen Bodenstreifen beleuchten (sog. interferometrischer Modus). Ferner können die Subpulse gegebenenfalls auch unterschiedliche und in der Regel orthogonale Polarisationen der elektromagnetischen Wellen aufweisen (sog. polarimetrischer Modus).

Die von dem SAR-System erfassten Radarechos der Subpulse treffen gleichzeitig oder zeitlich überlappend, jedoch aus unterschiedlichen Richtungen in einem entsprechenden Empfänger ein. Zum Trennen der Subpulse ist es aus dem Stand der Technik bekannt, digitale Strahlformung zu verwenden. Dabei werden Antennenrichtdiagramme bzw. Empfangskeulen derart generiert, dass jedes Antennenrichtdiagramm auf einen der Subpulse gerichtet ist. Nichtsdestotrotz enthalten über digitale Strahlformung getrennte Subpulse immer noch Interferenzen bzw. Störungen von anderen Subpulsen.

Die Druckschrift Gerhard Krieger et al: "Multidimensional Waveform Encoding: A New and Digital Beamforming Technique for Sythetic Aperture Radar Remote Sensing", IEEE Transaction on Geoscience and Remote Sensing, Bd. 46, Nr. 1, 1. Januar 2008, Seiten 31-46, beschreibt ein Synthetik-Apertur-Radarverfahren, in dem Subpulse in unterschiedlichen Azimut-Winkeln abgestrahlt werden und zum Empfang der Radarechos digitale Strahlformung genutzt wird.

In dem Dokument US 5 808 580 A ist ein Radarsystem offenbart, in dem Subpulse mit unterschiedlichen Frequenzen ausgesendet werden.

Das Dokument Wei Xu et al.: "MIMO-TOPS Mode for High-Resolution Ultra-Wide-Swath Full Polarimetric Imaging", Progress In Electromagnetics Research, Bd. 121, 1. Januar 2001, Seiten 19-37, offenbart ein Synthetik-Apertur-Radarverfahren, bei dem Subpulse als orthogonale Wellenformen mit speziellen Phasencodes ausgesendet werden und zum Empfang der Subpulse digitale Strahlformung genutzt wird.

In der Druckschrift Bo Zou et al.: "Design and performance analysis of orthogonal coding signal in MIMO-SAR", Science China Information Sciences, Bd. 54, Nr. 8, 3. Juni 2011, Seiten 1723-1737, ist ein Synthetik-Apertur-Radarverfahren offenbart, bei dem Subpulse ausgesendet werden, welche orthogonale phasencodierte Signale sind.

Aufgabe der Erfindung ist es, ein Synthetik-Apertur-Radarverfahren basierend auf einem Subpuls-Modus zu schaffen, mit dem die Interferenz der empfangenen Subpulse vermindert werden kann.

Diese Aufgabe wird durch das Verfahren gemäß Patentanspruch 1 bzw. die Vorrichtung gemäß Patentanspruch 12 gelöst. Weiterbildungen der Erfindung sind in den abhängigen Ansprüchen definiert.

Das erfindungsgemäße Synthetik-Apertur-Radarverfahren verwendet eine Radareinrichtung, die sich in eine Azimut-Richtung über der Erdoberfläche bewegt, wobei die Radareinrichtung eine Sendeeinrichtung zum Aussenden von Radarpulsen und eine Empfangseinrichtung zum Empfang von Radarechos der Radarpulse in einer zur Azimut-Richtung senkrechten Range-Richtung umfasst. In aufeinander folgenden Pulswiederholintervallen werden Radarpulse durch die Sendeeinrichtung ausgesendet und Radarechos durch die Empfangseinrichtung empfangen. In der Regel befindet sich die Radareinrichtung auf einem Satelliten.

Das erfindungsgemäße Synthetik-Apertur-Radarverfahren verwendet einen Subpuls-Modus. Dabei werden in einem zusammenhängenden Sendezeitintervall eines jeweiligen Pulswiederholintervalls mehrere Radarpulse in der Form von Subpulsen zur Erdoberfläche ausgesendet und in einem sich daran anschließenden, zusammenhängenden Empfangszeitintervall des jeweiligen Pulswiederholintervalls die Subpulse als Radarechos empfangen. Die Subpulse in einem Pulswiederholintervall werden über Kennzeichnungen unterschieden, wobei gleiche Subpulse in verschiedenen Pulswiederholintervallen die gleiche Kennzeichnung aufweisen. Mit anderen Worten sind die Pulswiederholintervalle identisch aufgebaut, so dass in jedem Pulswiederholintervall die gleichen Subpulse ausgesendet und deren Radarechos empfangen werden. In einer bevorzugten Ausführungsform wird die Kennzeichnung der Subpulse mittels einer Nummerierung derselben bewirkt. Werden die Subpulse zu unterschiedlichen Zeitpunkten ausgesendet, kann diese Nummerierung der zeitlichen Reihenfolge des Aussendens der Subpulse entsprechen. Nichtsdestotrotz kann die Kennzeichnung bzw. Nummerierung beliebig anders gewählt werden. Es ist lediglich sicherzustellen, dass die gleichen Subpulse in den unterschiedlichen Pulswiederholintervallen immer die gleiche Kennzeichnung erhalten.

Das erfindungsgemäße Verfahren zeichnet sich durch eine geeignete Codierung und Decodierung von Subpulsen aus. Dabei wird ein jeweiliger Subpuls vor dem Aussenden über die Sendeeinrichtung codiert, indem er mit einer Codierphase versehen wird. Analog wird ein jeweiliger empfangener codierter Subpuls (d.h. das Radarecho des entsprechenden codierten Subpulses) decodiert, indem der Subpuls mit einer Decodierphase versehen wird. Die Addition der Codierphase und Decodierphase für jeweilige Subpulse in einem jeweiligen Pulswiederholintervall und über die Pulswiederholintervalle hinweg bleibt dabei konstant. Auf diese Weise wird gewährleistet, dass die empfangenen Subpulse untereinander vergleichbar bleiben. Darüber hinaus variiert für jedes Paar von einem Subpuls mit einer Kennzeichnung und einem Subpuls mit einer anderen Kennzeichnung die Addition der Decodierphase für den (empfangenen codierten) Subpuls mit der Kennzeichnung und der Codierphase für den (ausgesendeten) Subpuls mit der anderen Kennzeichnung von einem Pulswiederholintervall zum nächsten. Durch diese Variation der Addition und damit der Restphase zwischen Decodierphase und Codierphase für unterschiedliche Subpulse kann effizient die Störung eines Subpulses durch andere Subpulse unterdrückt werden. Unter der Addition von Phasen ist hier und im Folgenden eine Addition modulo 360° bzw. $2\pi$ zu verstehen. Ebenso sind Phasen und damit auch die Codierphase und Decodierphase als Werte modulo 360° bzw. $2\pi$ zu verstehen.

Ferner wird im erfindungsgemäßen Verfahren eine besonders gute Unterdrückung der Interferenz dadurch erreicht, dass sich die Addition der Decodierphase für den Subpuls mit der Kennzeichnung und der Codierphase für den Subpuls mit der anderen Kennzeichnung um den gleichen Betrag, vorzugsweise in entgegengesetzter Richtung, von einem Pulswiederholintervall zum nächsten ändert. Die Unterdrückung der Interferenz ist dabei besonders gut, wenn die Änderung der Differenz 180° ist, da sich dann sukzessive Interferenz-Pulse auslöschen.

In einer, besonders bevorzugten Ausführungsform werden die Codierphase $\phi_{en}$ und Decodierphase $\phi_{de}$ wie folgt gewählt:

$$\phi_{en}(n,i) = -\frac{180°}{M}(i - n + j)^2 \quad (\mathrm{mod}\, 360°) \quad \mathrm{mit}\ n = 1, \ldots, P \ \mathrm{und}\ j = 0 \ \mathrm{oder}\ j = 1,$$

$$\phi_{de}(n,i) = +\frac{180°}{M}(i - n + j - S)^2 \quad (\mathrm{mod}\, 360°)$$

wobei $P$ die Gesamtanzahl der Subpulse in einem Pulswiederholintervall ist;
wobei die Subpulse über eine Nummerierung im Pulswiederholintervall gekennzeichnet sind und $n$ die Nummer des Subpulses ist;
wobei i ein fortlaufender Zähler für die aufeinander folgenden Pulswiederholintervalle ist;
wobei $M$ eine ganze Zahl mit $M \geq P$ ist.
wobei $S \in \mathbb{Z}$ derart gewählt ist, dass die Addition der Codierphase und Decodierphase für jeweilige Subpulse im jeweiligen Pulswiederholintervall und über die Pulswiederholintervalle hinweg konstant bleibt, wobei vorzugsweise $0 \leq S \leq M - P$ gilt.

Der obige Parameter S berücksichtigt sowohl die Zweiwegverzögerung der gesendeten Subpulse als auch einen zusätzlichen Freiheitsgrad in der Decodierung.

Mit dem erfindungsgemäßen Verfahren wird eine Unterdrückung der Interferenz gegebenenfalls auch ohne Trennung der Subpulse über digitale Strahlformung erreicht. Nichtsdestotrotz werden in einer besonders bevorzugten Ausführungsform die jeweiligen codierten Subpulse mittels digitaler Strahlformung durch unterschiedliche Empfangskeulen empfangen und anschließend decodiert.

Die Erzeugung der Subpulse und der entsprechenden Codierphasen und Decodierphasen kann je nach Ausgestaltung des erfindungsgemäßen Verfahrens analog oder digital erfolgen. Vorzugsweise wird die Codierung und/oder Decodierung der Subpulse digital durchgeführt. In einer bevorzugten Variante sind die Codierphasen und/oder Decodierphasen in einer Lookup-Tabelle digital gespeichert, auf welche im Rahmen der Codierung und/oder Decodierung zugegriffen wird. Hierdurch wird eine besonders schnelle Codierung bzw. Decodierung erreicht, da die benötigten Codierphasen bzw. Decodierphasen nicht immer berechnet werden müssen. Die erfindungsgemäße Codierung bzw. Decodierung wird z.B. über eine komplexe Multiplikation des entsprechenden Subpulses implementiert, d.h. das komplexe Signal des Subpulses wird mit der komplexen Exponentialfunktion multipliziert, die als Argument die Codierphase bzw.

Decodierphase enthält.

Je nach Ausgestaltung des Subpuls-Modus können die Subpulse in einem jeweiligen Pulswiederholintervall zumindest teilweise gleichzeitig und/oder zumindest teilweise zu unterschiedlichen Zeitpunkten ausgesendet werden. Ebenso können die Subpulse zumindest teilweise unterschiedliche Polarisationen aufweisen. Hierdurch können verschiedene, an sich bekannte Betriebsmodi realisiert werden.

In einer Variante erfassen die Subpulse in einem jeweiligen Pulswiederholintervall disjunkte Streifen auf der Erdoberfläche mit einer Breitenausdehnung in Range-Richtung. Hierdurch wird ein Breitstreifenmodus realisiert, mit dem ein besonders großer Bereich auf der Erdoberfläche erfasst wird. Ebenso können die Subpulse in einem jeweiligen Pulswiederholintervall die gleichen oder in Range-Richtung überlappenden Streifen auf der Erdoberfläche mit einer Breitenausdehnung in Range-Richtung erfassen. Diese Variante wird insbesondere für interferometrisches SAR genutzt, bei dem interferometrisch überlagerte SAR-Bilder des gleichen Bereichs auf der Erdoberfläche mittels der empfangenen Subpulse erzeugt werden. Hierüber können Höheninformationen über den erfassten Bereich auf der Erdoberfläche gewonnen werden.

Die erfindungsgemäße Codierung der Subpulse erfolgt in der Radareinrichtung, welche die Subpulse aussendet und empfängt. Die Decodierung der empfangenen Subpulse kann gegebenenfalls auch in dieser Radareinrichtung durchgeführt werden. Vorzugsweise erfolgt die Decodierung der Subpulse jedoch in einer Bodenstation auf der Erdoberfläche. Dabei werden die empfangenen Subpulse, gegebenenfalls nach Durchführung der digitalen Strahlformung, an die Bodenstation übermittelt. Optional kann die digitale Strahlformung (sofern vorhanden) auch in der Bodenstation durchgeführt werden.

Neben dem oben beschriebenen Verfahren betrifft die Erfindung ferner ein Synthetik-Apertur-Radarsystem mit einer Radareinrichtung, die sich im Betrieb in eine Azimut-Richtung über der Erdoberfläche bewegt. Das Synthetik-Apertur-Radarsystem ist dabei derart ausgestaltet, dass das erfindungsgemäße Verfahren bzw. eine oder mehrere bevorzugte Varianten des erfindungsgemäßen Verfahrens mit dem Synthetik-Apertur-Radarsystem durchführbar sind.

Ausführungsbeispiele der Erfindung werden nachfolgend anhand der beigefügten Figuren detailliert beschrieben.

Es zeigen:

Fig. 1                    ein Zeitdiagramm, welches den Subpuls-Modus verdeutlicht, der in einer Ausführungsform des erfindungsgemäßen Verfahrens verwendet wird;

Fig. 2 und Fig. 3    Ansichten einer Radareinrichtung, die in einer Ausführungsform des erfindungsgemäßen Verfahrens zum Aussenden und Empfangen von Subpulsen verwendet wird;

Fig. 4                    eine Ansicht der Radareinrichtung aus Fig. 2 und Fig. 3, wobei das Aussenden der Subpulse sowie deren Empfang über digitale Strahlformung wiedergegeben sind;

Fig. 5                    eine Ausführungsform eines Sendesystems, in dem die Subpulse gemäß dem erfindungsgemäßen Verfahren codiert werden;

Fig. 6                    eine Ausführungsform eines Empfangssystems, in dem die Subpulse gemäß dem erfindungsgemäßen Verfahren decodiert werden; und

Fig. 7 bis Fig. 9    Diagramme, welche die Unterdrückung von SubpulsInterferenzen mit dem erfindungsgemäßen Verfahren verdeutlichen.

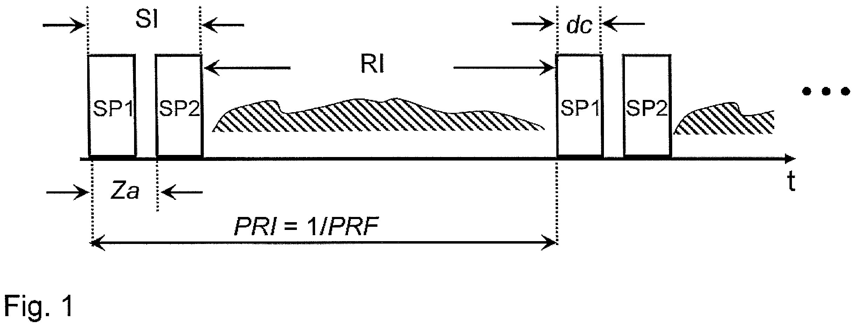

Die hier beschriebene Ausführungsform des erfindungsgemäßen Verfahrens beruht auf dem an sich bekannten Subpuls-Modus, wobei die einzelnen Subpulse nunmehr jedoch geeignet phasencodiert sind. Zur Verdeutlichung ist der Subpuls-Modus, der im hier beschriebenen Ausführungsbeispiel verwendet wird, in Fig. 1 wiedergegeben. In dieser Figur ist das Aussenden der Subpulse entlang der Zeitachse t gezeigt. Die Subpulse werden in aufeinander folgenden Pulswiederholintervallen PRI ausgesendet, wobei das Pulswiederholintervall der Kehrwert der entsprechenden Pulswiederholfrequenz PRF ist. In jedem Pulswiederholintervall wird nicht ein einzelner Radarpuls, sondern mehrere Subpulse ausgesendet. Hierfür ist ein Sendezeitintervall SI festgelegt, in dem das Aussenden der Subpulse erfolgt. In dem Beispiel der Fig. 1 werden zwei Subpulse SP1 und SP2 zeitlich aufeinander folgend ausgesendet. Der Zeitabstand zwischen den Sendezeitpunkten der beiden Subpulse ist dabei mit Za bezeichnet. Demgegenüber ist die Länge eines Subpulses mit dc bezeichnet. Je nach verwendeter Radareinrichtung können die Subpulse durch den gleichen Sender bzw. das gleiche Sendeantennenarray oder gegebenenfalls auch unterschiedliche Sender bzw. unterschiedliche Sendeantennenarrays ausgesendet werden. An das zusammenhängende Sendezeitintervall SI schließt sich innerhalb des Pulswiederholintervalls PRI ein Empfangszeitintervall RI an, innerhalb dessen dann die entsprechenden Radarechos der auf der Erdoberfläche reflektierten Subpulse empfangen werden. Diese Radarechos sind durch ein schraffiertes Profil verdeutlicht. Nach Ende des Empfangszeitintervalls beginnt ein neues Pulswiederholintervall, das wiederum aus einem Sendezeitintervall SI und einem Empfangszeitintervall RI besteht.

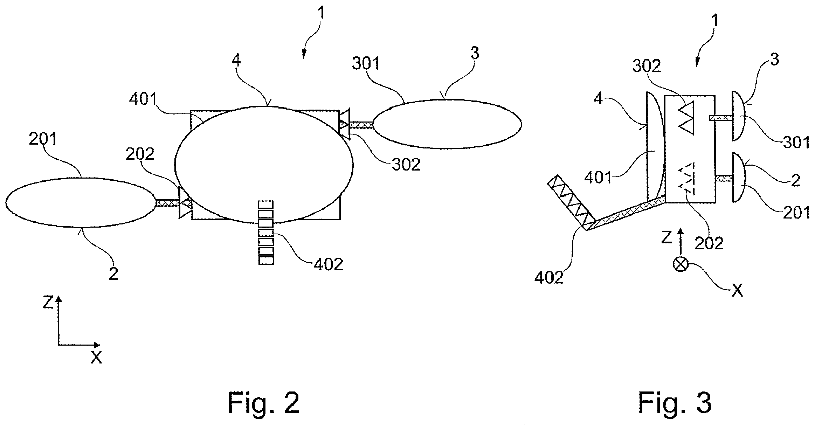

Fig. 2 und Fig. 3 zeigen Ansichten einer auf einem Satelliten befindlichen Radareinrichtung, welche basierend auf dem in Fig. 1 gezeigten Subpuls-Modus betrieben wird und in der eine Ausführungsform des erfindungsgemäßen Verfahrens zum Einsatz kommt. Fig. 2 zeigt in Draufsicht die Antennenkonfiguration der Radareinrichtung 1. Die Radareinrichtung ist Teil eines SAR-Systems, mit dem über die Echos von ausgesendeten Radarpulsen die Erdoberfläche erfasst und hieraus SAR-Bilder generiert werden. Gemäß der Ansicht aus Fig. 2 bewegt sich die Radareinrichtung in die sog. Azimut-Richtung x. Die Höhenerstreckung bzw. Elevation des Radars ist dabei durch die Koordinate z angedeutet. Das Radar umfasst zwei Sendeantennen 2 und 3, die sowohl in Azimut-Richtung als auch in Elevation zueinander versetzt sind. Die Sendeantenne 2 ist eine Reflektorantenne mit dem Reflektor 201 und entsprechenden Sendern 202. Die Antenne 3 weist den gleichen Aufbau wie die Antenne 2 auf und umfasst einen Reflektor 301 sowie Sender 302. In einer speziellen Variante liegt die Ausdehnung der Reflektoren 201 bzw. 301 bei 3 m in Azimut und 0,6 m in Elevation. Mit den Sendeantennen 2 und 3 werden abwechselnd die Subpulse SP1 und SP2 aus Fig. 1 ausgesendet. Mit anderen Worten sendet die Sendeantenne 2 den Subpuls SP1 aus, wohingegen die Sendeantenne 3 den Subpuls SP2 aussendet.

Zum Empfang der an der Erdoberfläche reflektierten Subpulse wird eine einzelne Empfangseinrichtung 4 in der Form einer großen Reflektorantenne verwendet, die den Reflektor 401 sowie ein Feed-Array 402 aus einer Vielzahl von Empfängern umfasst. Über dieses Feed-Array kann für die empfangenen Subpulse digitale Strahlformung durchgeführt werden, wie weiter unten näher erläutert wird. Das digitale Feed-Array umfasst in einer speziellen Variante 27 einzelne Empfänger. Die Ausdehnung des Reflektors der Antenne 4 liegt in einer speziellen Ausgestaltung bei 3 m in Azimut und 2 m in Elevation. Das Feed-Array 402 wird im sog. SCORE-Modus betrieben (SCORE = Scan-On-Receive). In diesem Modus werden die Radarechos über schmale Empfangskeulen (sog. SCORE-Beams) verfolgt. Der SCORE-Modus ist an sich aus dem Stand der Technik bekannt und wird deshalb nicht weiter im Detail erläutert. In der hier beschriebenen Ausführungsform wird das Radarecho für jeden der Subpulse durch einen separaten SCORE-Beam verfolgt, was über digitale Strahlformung erreicht wird. Zur Verdeutlichung ist in Fig. 3 auch nochmals die Seitenansicht der Radareinrichtung aus Fig. 2 gesehen in Richtung entgegengesetzt zur Azimut-Richtung wiedergegeben. Dabei wird insbesondere die Anordnung des Feed-Arrays 402 in Bezug auf den Reflektor 401 ersichtlich.

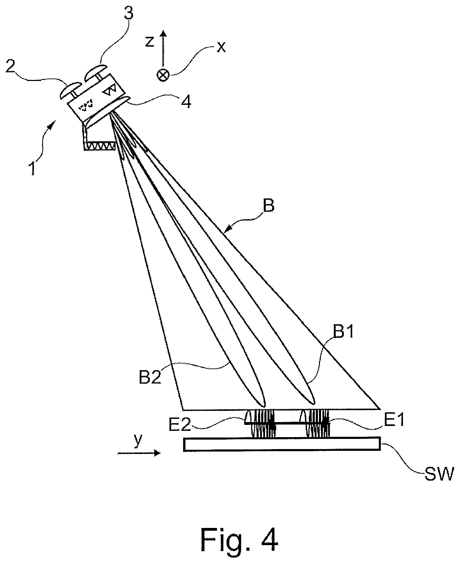

Fig. 4 verdeutlicht den Betrieb der Radareinrichtung aus Fig. 2 und Fig. 3. Mit den beiden Sendeantennen 2 und 3 wird der gleiche Streifen SW (englisch: swath) auf der Erdoberfläche beleuchtet. Demzufolge eignet sich die Anordnung insbesondere zur Erzeugung interferometrisch überlagerter SAR-Bilder, wodurch Höheninformationen über die Erdoberfläche gewonnen werden können. Der Winkelbereich, in dem die beiden Antennen 2 und 3 senden, ist mit B bezeichnet. Der Streifen SW erstreckt sich in die sog. Range-Richtung y, die senkrecht zur Azimut-Richtung x ist. Wie erwähnt, sendet jede der Antennen 2 und 3 die entsprechenden Subpulse SP1 bzw. SP2 aus. Mittels der Empfangsantenne 4 wird über digitale Strahlformung das Echo E1 des Subpulses SP1 durch den SCORE-Beam B1 empfangen, wohingegen durch den SCORE-Beam B2 das Echo E2 des Subpulses SP2 empfangen wird. Die einzelnen SCORE-Beams verfolgen dabei die jeweiligen Echos innerhalb des Streifens SW.

Basierend auf der digitalen Strahlformung über die beiden Empfangskeulen B1 und B2 können die Echos der verschiedenen Subpulse getrennt werden. Man macht sich hierbei die Tatsache zunutze, dass zu jedem Zeitpunkt die beiden Echos aus leicht unterschiedlichen Winkeln ankommen, die durch die Empfangskeulen B1 und B2 repräsentiert werden. Nichtsdestotrotz enthalten die über digitale Strahlformung getrennten Signale weiterhin eine Störung, d.h. es gibt immer noch eine Interferenz des einen Pulsechos mit dem anderen. Um diese Interferenz zu unterdrücken, wird die erfindungsgemäße Phasencodierung und Phasendecodierung der Subpulse verwendet, die im Folgenden anhand eines Beispiels näher erläutert wird.

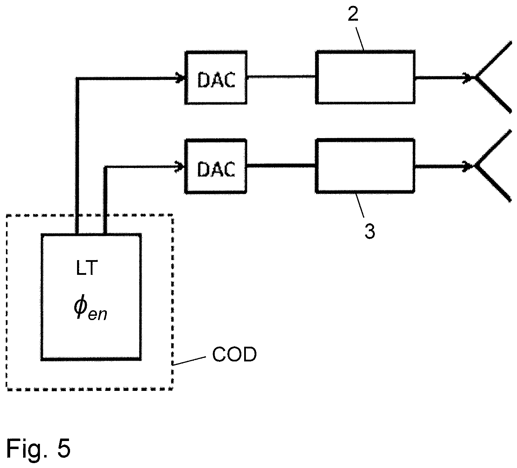

Fig. 5 zeigt in schematischer Darstellung die erfindungsgemäße Phasencodierung von Subpulsen, die mit den in Fig. 2 gezeigten Sendeantennen 2 und 3 ausgesendet werden. Die Sendeantennen 2 und 3 sind in Fig. 5 durch Blöcke angedeutet, für welche zur Verdeutlichung ferner zwei Antennenelemente wiedergegeben sind. Die Subpulse sind üblicherweise Chirps, d.h. linear frequenzmodulierte Signale. Die Phasencodierung COD erfolgt digital mit Hilfe einer Lookup-Tabelle LT, aus der für die einzelnen Subpulse die Codierphasen $\phi_{en}$ ausgelesen werden. Die hierdurch phasencodierten Subpulse werden in jeweiligen Digital-Analog-Wandlern DAC in analoge Signale gewandelt, wobei der Subpuls SP1 über den Sender 2 und den Subpuls SP2 über den Sender 3 ausgesendet wird. In der hier beschriebenen Ausführungsform lautet die Codierphase wie folgt:

$$\phi_{en}(n,i) = -\frac{180°}{M}(i-n)^2 \quad (\bmod\ 360°) \quad \text{mit} \ n = 1,\ldots,P$$

wobei P die Gesamtanzahl der Subpulse in einem Pulswiederholintervall ist;
wobei *n* die Nummer des Subpulses im Pulswiederholintervall ist;
wobei *i* der fortlaufende Zähler für die aufeinander folgenden Pulswiederholintervalle ist;
wobei *M* eine ganze Zahl mit $M \geq P$ ist.

Die obige Formel ist allgemein angegeben und im hier beschriebenen Ausführungsbeispiel mit den beiden Subpulsen SP1 und SP2 ist *P* = 2 gewählt. Dabei entspricht *n = 1* dem Subpuls SP1 und *n = 2* dem Subpuls SP2. Für den Parameter *M* wurde der Wert 2 verwendet.

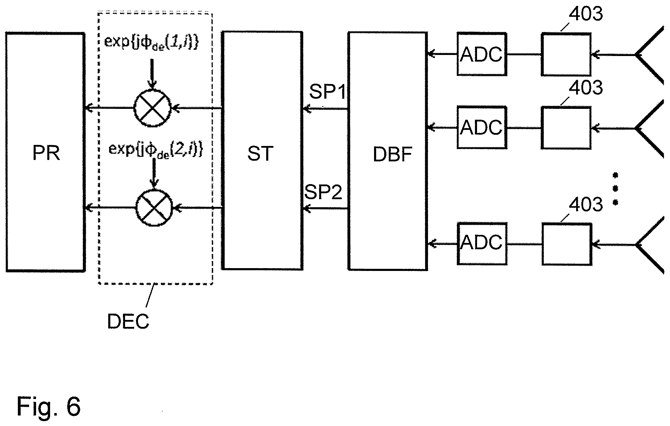

Fig. 6 zeigt in schematischer Darstellung die Durchführung der Phasendecodierung für die Subpulse, die über die Reflektorantenne 4 aus Fig. 2 empfangen werden. Dabei sind die einzelnen Empfangselemente des Feed-Arrays 402 mit Bezugszeichen 403 angedeutet, wobei zur Verdeutlichung ferner entsprechende Antennen für die einzelnen Empfänger dargestellt sind. Die über die Empfänger 403 empfangenen Signale werden zunächst über jeweilige Analog-Digital-Wandler ADC digitalisiert. Anschließend wird die bereits oben beschriebene digitale Strahlformung DBF durchgeführt, wodurch die Subpulse entsprechend den in Fig. 4 gezeigten Empfangskeulen B1 und B2 getrennt werden. Diese getrennten Subpulse werden dann in einem Speicher ST in der Radareinrichtung hinterlegt. Üblicherweise werden die im Speicher ST gespeicherten Daten dann zur Erdoberfläche übertragen und dort weiterverarbeitet. Gegebenenfalls können die einzelnen Signale der Empfänger 403 nach Digitalisierung auch direkt in dem Speicher hinterlegt und anschließend an die Erdoberfläche übertragen werden, wobei die digitale Strahlformung in diesem Fall auch erst auf der Erdoberfläche durchgeführt wird.

Die Signale aus dem Speicher ST werden schließlich einer Phasendecodierung DEC unterzogen, und zwar mit entsprechenden Phasen $\phi_{de}(1,i)$ für Subpuls SP1 und $\phi_{de}(2,i)$ für Subpuls SP2. Nach der Phasendecodierung erfolgt dann in an sich bekannter Weise eine Bildprozessierung PR, wobei in der hier beschriebenen Ausführungsform die Radarbilder vorzugsweise interferometrisch überlagert werden.

In der hier beschriebenen Ausführungsform lautet die Decodierphase wie folgt:

$$\phi_{de}(n,i) = +\frac{180°}{M}\left(i - n - S\right)^2 \quad (\text{mod } 360°),$$

wobei $S \in \mathbb{Z}$, $0 \leq S \leq M - P$ und *i,n* wie oben für die Codierphase definiert.

Für den betrachteten Fall von zwei Subpulsen gilt dabei *S = 0*.

Durch die Wahl der Codierung bzw. Decodierung basierend auf den obigen Formeln wird erreicht, dass die Interferenz zwischen einem Subpuls und jedem anderen Subpuls im Pulswiederholintervall vermindert bzw. unterdrückt wird. Dies wird im Folgenden anhand der nachfolgenden Tabelle erläutert.

Tabelle:

| PRI Nr. | | i = 1 | | i = 2 | | i = 3 | |
|---|---|---|---|---|---|---|---|
| Subpuls Nr. | | n=1 | n=2 | n=1 | n=2 | n=1 | n=2 |
| Signal | Codierphase $\phi_{en}(n,i)$ | 0° | -90° | -90° | 0° | 0° | -90° |
| | Decodierphase $\phi_{de}(n,i)$ | 0° | +90° | +90° | 0° | 0° | +90° |
| | Restphase | 0° | 0° | 0° | 0° | 0° | 0° |
| Störung / Interferenz | Codierphase $\phi_{en}(n,i)$ | -90° | 0° | 0° | -90° | -90° | 0° |
| | Decodierphase $\phi_{de}(n,i)$ | 0° | +90° | +90° | 0° | 0° | +90° |
| | Restphase | -90° | +90° | +90° | -90° | -90° | +90° |

In der obigen Tabelle wurden entsprechend dem dargestellten Ausführungsbeispiel die Subpulse SP1 und SP2 betrachtet, welche mit $n = 1$ für SP1 und $n = 2$ für SP2 spezifiziert sind. $i$ nummeriert wiederum die Pulswiederholintervalle. Im Abschnitt "Signal" der Tabelle finden sich die Codierphase und Decodierphase für die jeweiligen Subpulse entsprechend den obigen Formeln für diese Phasen. Man erkennt, dass die Restphase zwischen diesen Phasen (d.h. die Addition der Phasen) 0° beträgt. Es wird somit sichergestellt, dass durch die Codierung und Decodierung die Subpulse nicht verändert werden. Allgemein ist die Codierphase und Decodierphase immer so zu wählen, dass die Restphase der Subpulse in den jeweiligen Pulswiederholintervallen und über die Pulswiederholintervalle hinweg konstant bleibt. Im Abschnitt Störung/Interferenz der Tabelle wird jeweils die Störung eines Subpulses durch den anderen Subpuls betrachtet. Demzufolge wird als Codierphase immer die Codierphase des jeweiligen anderen Subpulses wiedergegeben. Mit anderen Worten wird für die Störung/Interferenz als Codierphase für den Subpuls $n = 1$ die Codierphase des Signals von Subpuls $n = 2$ angegeben und umgekehrt. Die Decodierung der Interferenz erfolgt wiederum mit der Decodierphase des jeweiligen Subpulses. Demzufolge ist für die Störung bzw. Interferenz als Decodierphase die Decodierphase des Signals in der gleichen Spalte angegeben.

Wie man aus der Tabelle erkennt, ergibt sich für die Restphase der Störung bzw. Interferenz der gleichen Subpulse von einem Pulsintervall zum nächsten eine Phasenänderung von genau 180°. Mit anderen Worten verändert sich in der dargestellten Tabelle für den Subpuls mit $n = 1$ die Restphase von -90° auf +90° im nächsten Pulswiederholintervall und dann wieder auf -90° im darauffolgenden Pulswiederholintervall usw. Entsprechend verändert sich die Restphase für den Subpuls mit $n = 2$ von +90° auf -90° im nächsten Pulswiederholintervall und dann wieder auf +90° im darauffolgenden Pulswiederholintervall usw. Durch diese Phasensprünge von 180° wird die Unterdrückung der Interferenz zwischen den Subpulsen erreicht, da sukzessive Interferenz-Pulse das Vorzeichen wechseln und sich damit auslöschen. Das Maß der Unterdrückung hängt mit der Ähnlichkeit der Interferenzen zusammen, die je nach den Gegebenheiten der Radarerfassung unterschiedlich sein können. Eine besonders gute Unterdrückung der Interferenz wird mit der obigen Variation der Restphase von 180° erreicht. Nichtsdestotrotz führen auch andere Veränderungen der Restphase zu einer Interferenzunterdrückung. Im Rahmen der Erfindung muss dabei gewährleistet werden, dass für einen Subpuls mit entsprechender Nummer die Restphase der Störung bzw. Interferenz mit jedem Subpuls mit einer anderen Nummer von einem Pulsintervall zum nächsten variiert.

Das im Vorangegangenen beschriebene Verfahren erfordert in der Implementierung in einem SAR-Radarsystem keinen nennenswerten Mehraufwand. Hardwaretechnisch muss sendeseitig die Möglichkeit bestehen, die Subpulse mit einer vorgegebenen Codierphase zu versehen, die pro Subpuls individuell eingestellt wird. Diese Möglichkeit haben schon jetzige Radarsysteme, da die Sendesignale und deren Phase in der Regel digital über eine Lookup-Tabelle generiert werden. Wie oben erwähnt, erfolgt die Phasendecodierung in der Regel am Boden. Hierzu wird geeignete Software bei der Bildprozessierung verwendet, und es ist lediglich eine geeignete Pulszuordnung notwendig, welche auf jetzigen Systemen bereits implementiert ist.

Wie sich aus den obigen Ausführungen ergibt, wird basierend auf der Erfindung ein gepulstes SAR-System geschaffen, welches innerhalb eines Pulswiederholintervalls zwei oder mehrere Subpulse dermaßen sendet, dass diese mit einer dedizierten deterministischen Phasencodierung versehen werden. Die Phasencodierung kann sich von Subpuls zu Subpuls ändern. Ferner kann sich die Phasencodierung nach Ablauf eines Pulswiederholintervalls ändern. Der Phasenwert der Codierung bleibt jedoch während der Zeit eines jeweiligen Subpulses fest. Erfindungswesentlich ist dabei, dass die Restphase zwischen Codierphase und Decodierphase über die Subpulse hinweg konstant bleibt, wohingegen eine Variation der Restphase des Störsignals zwischen einem Subpuls und jedem anderen Subpuls über die Pulswiederholintervalle hinweg auftritt.

Zur Phasencodierung wird sendeseitig eine Hardware verwendet, welche in der Lage ist, die Phase eines jeden Subpulses einzustellen. Dies wird in der oben beschriebenen Ausführungsform über eine gespeicherte Lookup-Tabelle erreicht. Die Phasencodierung kann auf Softwareebene bei der digitalen Pulsgenerierung oder gegebenenfalls auch durch analoge Modulation der Subpulse erreicht werden.

Auf der Empfangsseite werden die empfangenen Daten entsprechend eines geeigneten Schemas decodiert. Das Schema wird unabhängig davon angewandt, ob die vorherige Verarbeitung der Empfangssignale durch ein Verfahren der digitalen oder analogen Strahlformung oder ein anderes Verfahren stattfindet. Das Decodierungsschema leitet sich aus der Phasencodierung der Subpulse ab. In der Regel hat jeder Subpuls ein eigenes Decodierungsschema. Die Anwendung des Decodierungsschemas kann durch eine komplexe Multiplikation der Empfangsdaten mit komplexen Gewichten erfolgen. Hierbei kann jeder Empfangsdatenstrom eines entsprechenden Subpulses mit dem Decodierungsschema dieses Subpulses multipliziert werden, wie dies im obigen Beispiel der Fall ist. Ebenso kann jedoch der Datenstrom des empfangenen Signals jeweils mit dem Decodierungsschema jedes Subpulses multipliziert werden.

Die Anwendung des Decodierungsschemas führt zur Erhaltung der Empfangsleistung eines Subpulses und zur Unterdrückung der Leistung der anderen Subpulse. Mit dem erfindungsgemäßen Verfahren wird somit eine echte Interferenzunterdrückung erreicht, d.h. die Leistung wird eliminiert und nicht auf Bereiche aufgeteilt. Die Stärke der Unterdrückung ist abhängig von der Wahl der Radarparameter, wie z.B. der Pulswiederholfrequenz und der prozessierten Dopplerbandbreite.

Das Verfahren der Erfindung kann unabhängig davon angewandt werden, ob die Subpulse denselben oder unterschiedliche Bodenstreifen beleuchten. Jedoch ergibt sich ein erhöhter Mehrwert, wenn die Subpulse denselben Bodenstreifen beleuchten, weil dann eine Interferenzunterdrückung durch andere Verfahren, wie z.B. der digitalen Strahlformung, nicht so gut möglich ist.

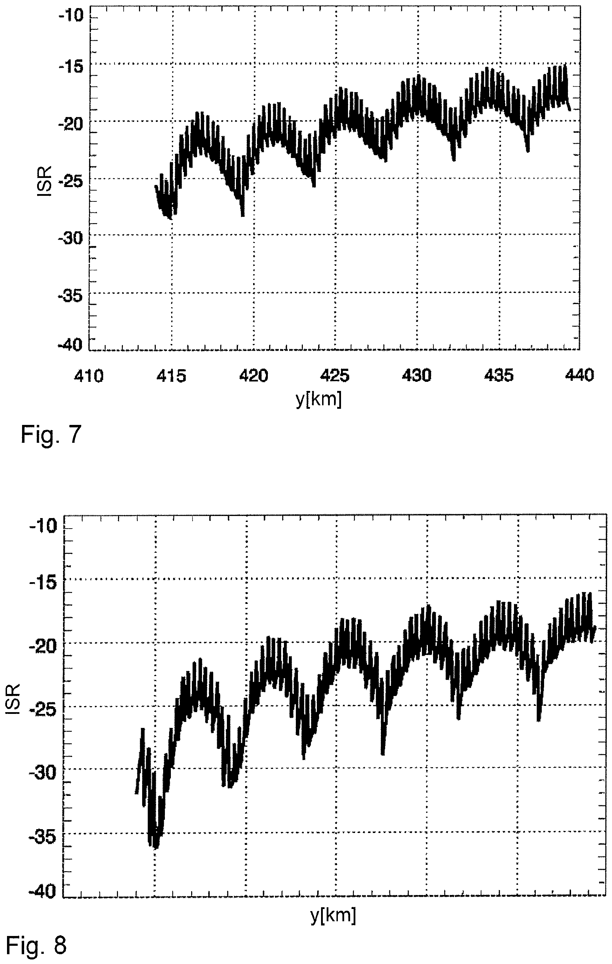

Die mit dem erfindungsgemäßen Verfahren erreichte Verbesserung konnte für das oben beschriebene Radarsystem der Fig. 2 für die Phasencodierung der zwei Subpulse SP1 und SP2 nachgewiesen werden. Dies wird durch die Figuren 7 bis 9 verdeutlicht. Fig. 7 zeigt dabei das Interferenz-zu-Signal-Verhältnis ISR der im Subpuls SP1 enthaltenen Störung in Abhängigkeit von der Range-Position y ohne Verwendung der erfindungsgemäßen Phasencodierung. Analog zeigt Fig. 8 das Interferenz-zu-Signal-Verhältnis ISR für die Störung im Subpuls SP2 in Abhängigkeit von der Range-Position y ohne erfindungsgemäße Phasencodierung. Die Werte für ISR werden dabei für weiter entfernte Range-Positionen größer und erreichen bis zu -16 dB, was ein inakzeptabel hoher Wert ist.

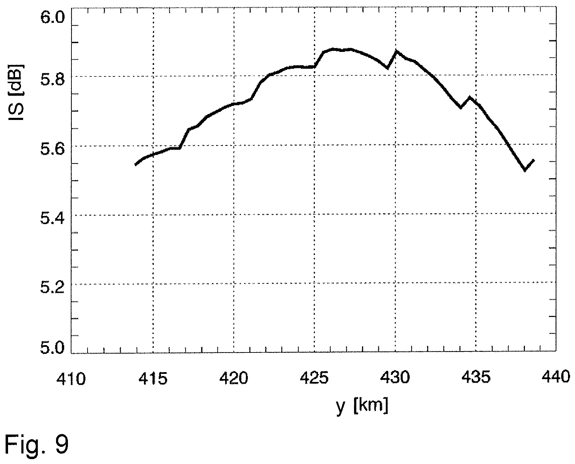

Mit der erfindungsgemäßen Phasencodierung und Phasendecodierung kann eine Interferenzunterdrückung für die Signale aus Fig. 7 und Fig. 8 bewirkt werden. Diese Interferenzunterdrückung ist in Fig. 9 gezeigt. Die Interferenzunterdrückung IS ist dabei wiederum in Abhängigkeit von der Range-Position y wiedergegeben. Wie man erkennt, liegen die Werte der Interferenzunterdrückung zwischen 5,5 dB an den Rändern des entsprechend erfassten Bodenstreifens und 5,85 dB in der Mitte des Bodenstreifens. Dies entspricht einem Faktor von 3,5 bis 4 in der Unterdrückung der Interferenzleistung. Das mit der in Fig. 9 gezeigten Unterdrückung erreichte Interferenzzu-Signal-Verhältnis für die einzelnen Störsignale der Fig. 7 und 8 ergibt sich durch die Subtraktion der dB-Werte aus Fig. 9 von den entsprechenden Werten aus Fig. 7 bis Fig. 8. Dies führt zu einer Interferenzunterdrückung von mehr als -20 dB über den gesamten Streifen, was ein akzeptabler Wert für SAR-Radarsysteme ist.

## Patentansprüche

**1.** Synthetik-Apertur-Radarverfahren zur Fernerkundung der Erdoberfläche über eine Radareinrichtung (1), die sich in eine Azimut-Richtung (x) über der Erdoberfläche bewegt, wobei die Radareinrichtung (1) eine Sendeeinrichtung (2, 3) zum Aussenden von Radarpulsen und eine Empfangseinrichtung (4) zum Empfang von Radarechos der Radarpulse in einer zur Azimut-Richtung (x) senkrechten Range-Richtung (y) umfasst, wobei in aufeinander folgenden Pulswiederholintervallen (PRI) Radarpulse durch die Sendeeinrichtung (2, 3) ausgesendet und Radarechos durch die Empfangseinrichtung (4) empfangen werden, wobei in einem zusammenhängenden Sendezeitintervall (SI) eines jeweiligen Pulswiederholintervalls (PRI) mehrere Radarpulse in der Form von Subpulsen (SP1, SP2) zur Erdoberfläche ausgesendet werden und in einem sich daran anschließenden, zusammenhängenden Empfangszeitintervall (RI) des jeweiligen Pulswiederholintervalls (PRI) die Subpulse (SP1, SP2) als Radarechos empfangen werden, wobei die Subpulse (SP1, SP2) in einem Pulswiederholintervall (PRI) über unterschiedliche Kennzeichnungen unterschieden werden und gleiche Subpulse (SP1, SP2) in verschiedenen Pulswiederholintervallen (PRI) die gleiche Kennzeichnung aufweisen,

wobei ein jeweiliger Subpuls (SP1, SP2) vor dem Aussenden codiert wird, indem er mit einer Codierphase ($\phi_{en}$) versehen wird, und ein jeweiliger empfangener codierter Subpuls (SP1, SP2) decodiert wird, indem er mit einer Decodierphase ($\phi_{de}$) versehen wird,

**dadurch gekennzeichnet, dass**

die Addition der Codierphase ($\phi_{en}$) und Decodierphase ($\phi_{de}$) für jeweilige Subpulse (SP1, SP2) im jeweiligen Pulswiederholintervall (PRI) und über die Pulswiederholintervalle (PRI) hinweg konstant bleibt und für jedes Paar von einem Subpuls (SP1, SP2) mit einer Kennzeichnung und einem Subpuls (SP1, SP2) mit einer anderen Kennzeichnung die Addition der Decodierphase ($\phi_{de}$) für den Subpuls (SP1, SP2) mit der Kennzeichnung und der Codierphase ($\phi_{en}$) für den Subpuls (SP1, SP2) mit der anderen Kennzeichnung von einem Pulswiederholintervall (PRI) zum nächsten variiert, wobei sich die Addition der Decodierphase ($\phi_{de}$) für den Subpuls (SP1, SP2) mit der Kennzeichnung und der Codierphase ($\phi_{en}$) für den Subpuls (SP1, SP2) mit der anderen Kennzeichnung um den gleichen Betrag von einem Pulswiederholintervall (PRI) zum nächsten ändert.

2. Verfahren nach Anspruch 1, **dadurch gekennzeichnet, dass** sich die Addition der Decodierphase ($\phi_{de}$) für den Subpuls (SP1, SP2) mit der Kennzeichnung und der Codierphase ($\phi_{en}$) für den Subpuls (SP1, SP2) mit der anderen Kennzeichnung um den gleichen Betrag in entgegengesetzter Richtung von einem Pulswiederholintervall (PRI) zum nächsten ändert.

3. Verfahren nach Anspruch 1 oder 2, **dadurch gekennzeichnet, dass** der Betrag 180° ist.

4. Verfahren nach einem der vorhergehenden Ansprüche, **dadurch gekennzeichnet, dass** die Codierphase $\phi_{en}$ und Decodierphase $\phi_{de}$ wie folgt lauten:

$$\phi_{en}(n,i) = -\frac{180°}{M}(i - n + j)^2 \pmod{360°} \text{ mit } n = 1,\dots,P \text{ und } j = 0 \text{ oder } j = 1,$$

$$\phi_{de}(n,i) = +\frac{180°}{M}(i - n + j - S)^2 \pmod{360°},$$

wobei P die Gesamtanzahl der Subpulse (SP1, SP2) in einem Pulswiederholintervall (PRI) ist;
wobei die Subpulse (SP1, SP2) über eine Nummerierung im Pulswiederholintervall (PRI) gekennzeichnet sind und $n$ die Nummer des Subpulses (SP1, SP2) ist;
wobei i ein fortlaufender Zähler für die aufeinander folgenden Pulswiederholintervalle (PRI) ist;
wobei $M$ eine ganze Zahl mit $M \geq P$ ist;
wobei $S \in \mathbb{Z}$ derart gewählt ist, dass die Addition der Codierphase ($\phi_{en}$) und Decodierphase ($\phi_{de}$) für jeweilige Subpulse (SP1, SP2) im jeweiligen Pulswiederholintervall (PRI) und über die Pulswiederholintervalle (PRI) hinweg konstant bleibt, wobei vorzugsweise $0 \leq S \leq M - P$ gilt.

5. Verfahren nach einem der vorhergehenden Ansprüche, **dadurch gekennzeichnet, dass** die jeweiligen codierten Subpulse (SP1, SP2) mittels digitaler Strahlformung durch unterschiedliche Empfangskeulen (B1, B2) empfangen werden und anschließend decodiert werden.

6. Verfahren nach einem der vorhergehenden Ansprüche, **dadurch gekennzeichnet, dass** die Codierung (COD) und/oder Decodierung (DEC) der Subpulse (SP1, SP2) digital durchgeführt wird, wobei die Codierphasen ($\phi_{en}$) und/oder Decodierphasen ($\phi_{de}$) vorzugsweise in einer Lookup-Tabelle (LT) digital gespeichert sind, auf welche im Rahmen der Codierung (COD) und/oder Decodierung (DEC) zugegriffen wird.

7. Verfahren nach einem der vorhergehenden Ansprüche, **dadurch gekennzeichnet, dass** die Subpulse (SP1, SP2) in einem jeweiligen Pulswiederholintervall (PRI) zumindest teilweise gleichzeitig und/oder zumindest teilweise zu unterschiedlichen Zeitpunkten ausgesendet werden und/oder zumindest teilweise unterschiedliche Polarisationen aufweisen.

8. Verfahren nach einem der vorhergehenden Ansprüche, **dadurch gekennzeichnet, dass** die Subpulse (SP1, SP2) in einem jeweiligen Pulswiederholintervall (PRI) disjunkte Streifen (SW) auf der Erdoberfläche mit einer Breitenausdehnung in Range-Richtung (y) erfassen.

9. Verfahren nach einem der Ansprüche 1 bis 7, **dadurch gekennzeichnet, dass** die Subpulse (SP1, SP2) in einem jeweiligen Pulswiederholintervall (PRI) die gleichen oder in Range-Richtung (y) überlappende Streifen auf der Erdoberfläche mit einer Breitenausdehnung in Range-Richtung (y) erfassen.

10. Verfahren nach Anspruch 9, **dadurch gekennzeichnet, dass** interferometrisch überlagerte SAR-Bilder des gleichen Bereichs auf der Erdoberfläche mittels der empfangenen Subpulse (SP1, SP2) ermittelt werden.

11. Verfahren nach einem der vorhergehenden Ansprüche, **dadurch gekennzeichnet, dass** die Decodierung (DEC) der Subpulse (SP1, SP2) in einer Bodenstation auf der Erdoberfläche erfolgt.

12. Synthetik-Apertur-Radarsystem zur Fernerkundung der Erdoberfläche mit einer Radareinrichtung (1), die sich im Betrieb in eine Azimut-Richtung (x) über der Erdoberfläche bewegt, wobei die Radareinrichtung (1) eine Sendeeinrichtung (2, 3) zum Aussenden von Radarpulsen und eine Empfangseinrichtung (4) zum Empfang von Radarechos der Radarpulse in einer zur Azimut-Richtung (x) senkrechten Range-Richtung (y) umfasst, wobei das Synthetik-Apertur-Radarsystem derart ausgestaltet ist, dass es im Betrieb ein Verfahren durchführt, bei dem

in aufeinander folgenden Pulswiederholintervallen (PRI) Radarpulse durch die Sendeeinrichtung (2, 3) ausgesendet und Radarechos durch die Empfangseinrichtung (4) empfangen werden, wobei in einem zusammenhängenden Sendezeitintervall (SI) eines jeweiligen Pulswiederholintervalls (PRI) mehrere Radarpulse in der Form von Subpulsen (SP1, SP2) zur Erdoberfläche ausgesendet werden und in einem sich daran anschließenden, zusammenhängenden Empfangszeitintervall (RI) des jeweiligen Pulswiederholintervalls (PRI) die Subpulse (SP1, SP2) als Radarechos empfangen werden, wobei die Subpulse (SP1, SP2) in einem Pulswiederholintervall (PRI) über unterschiedliche Kennzeichnungen unterschieden werden und gleiche Subpulse (SP1, SP2) in verschiedenen Pulswiederholintervallen die gleiche Kennzeichnung aufweisen,
wobei ein jeweiliger Subpuls (SP1, SP2) vor dem Aussenden codiert wird, indem er mit einer Codierphase ($\phi_{en}$) versehen wird, und ein jeweiliger empfangener codierter Subpuls (SP1, SP2) decodiert wird, indem er mit einer Decodierphase ($\phi_{de}$) versehen wird,
**dadurch gekennzeichnet dass**,
die Addition der Codierphase ($\phi_{en}$) und Decodierphase ($\phi_{de}$) für jeweilige Subpulse (SP1, SP2) im jeweiligen Pulswiederholintervall (PRI) und über die Pulswiederholintervalle (PRI) hinweg konstant bleibt und für jedes Paar von einem Subpuls (SP1, SP2) mit einer Kennzeichnung und einem Subpuls (SP1, SP2) mit einer anderen Kennzeichnung die Addition der Decodierphase ($\phi_{de}$) für den Subpuls (SP1, SP2) mit der Kennzeichnung und der Codierphase ($\phi_{en}$) für den Subpuls (SP1, SP2) mit der anderen Kennzeichnung von einem Pulswiederholintervall (PRI) zum nächsten variiert, wobei sich die Addition der Decodierphase ($\phi_{de}$) für den Subpuls (SP1, SP2) mit der Kennzeichnung und der Codierphase ($\phi_{en}$) für den Subpuls (SP1, SP2) mit der anderen Kennzeichnung um den gleichen Betrag von einem Pulswiederholintervall (PRI) zum nächsten ändert.

13. Synthetik-Apertur-System nach Anspruch 12, welches zur Durchführung eines Verfahrens nach einem der Ansprüche 2 bis 11 eingerichtet ist.

**Claims**

1. A synthetic-aperture radar method for remote sensing the earth's surface via a radar device (1), which moves in an azimuth direction (x) across the earth's surface, wherein the radar device (1) comprises a sender device (2, 3) to send radar pulses and a receiver device (4) to receive radar echoes of the radar pulses in a range direction (y) perpendicular to the azimuth direction (x), wherein at successively occurring pulse repetition intervals (PRI) radar pulses are sent by the sender device (2, 3) and radar echoes are received by the receiver device (4), wherein a plurality of radar pulses are sent in the form of subpulses (SP1, SP2) to the earth's surface at a continuous sending time interval (SI) of a respective pulse repetition interval (PRI) and the subpulses (SP1, SP2) are received as radar echoes at a continuous receiving interval (RI) subsequent to this, wherein the subpulses (SP1, SP2) in a pulse repetition interval are distinguished via different markings and identical subpulses (SP1, SP2) in different pulse repetition intervals (PRI) comprise the same markings,
wherein a respective subpulse (SP1, SP2) is coded before sending by adding a coding phase ($\phi_{en}$), and a respectively received coded subpulse (SP1, SP2) is decoded by adding a decoding phase ($\phi_{de}$),

**characterized in that**

the addition of the coding phase ($\phi_{en}$) and the decoding phase ($\phi_{de}$) remains constant for the respective subpulses (SP1, SP2) within the respective pulse repetition interval (PRI) and across the pulse repetition intervals (PRI) and, for each pair of one subpulse (SP1, SP2) with one marking and one subpulse (SP1, SP2) with another marking, the addition of the decoding phase ($\phi_{de}$) for the subpulse (SP1, SP2) with the one marking and of the coding phase ($\phi_{en}$) for the subpulse (SP1, SP2) with the other marking varies from one pulse repetition interval (PRI) to the next, wherein the addition of the decoding phase ($\phi_{de}$) for the subpulse (SP1, SP2) with the one marking and of the coding phase ($\phi_{en}$) for the subpulse (SP1, SP2) with the other marking changes by the same amount from one pulse repetition interval (PRI) to the next.

2. The method according to claim 1, **characterized in that** the addition of the decoding phase ($\phi_{de}$) for the subpulse (SP1, SP2) with the one marking and of the coding phase ($\phi_{en}$) for the subpulse (SP1, SP2) with the other marking changes by the same amount in an opposing direction from one pulse repetition interval (PRI) to the next.

3. The method according to claim 1 or 2, **characterized in that** the amount is 180°.

4. The method according to any one of the preceding claims, **characterized in that** the coding phase $\phi_{en}$ and the decoding phase $\phi_{de}$ are as follows:

$$\phi_{en}(n,i) = -\frac{180°}{M}(i-n+j)^2 \quad (\text{mod } 360°) \quad \text{with } n = 1,...,P \text{ and } j = 0 \text{ or } j = 1,$$

$$\phi_{de}(n,i) = +\frac{180°}{M}(i-n+j-S)^2 \quad (\text{mod } 360°),$$

wherein P is the total number of the subpulses (SP1, SP2) in a pulse repetition interval (PRI);
wherein the subpulses (SP1, SP2) are marked by a numbering within the pulse repetition interval (PRI) and n is the number of the subpulse (SP1, SP2).
wherein $i$ is a successive counter for the consecutive pulse repetition intervals (PRI);
wherein M is an integer with $M \geq P$;
wherein $S \in \mathbb{Z}$ is selected in such a way that the addition of the coding phase ($\phi_{en}$) and the decoding phase ($\phi_{de}$) for the respective subpulses (SP1, SP2) remains constant within the respective pulse repetition interval (PRI) and across the pulse repetition interval (PRI), whereby, preferably, $0 \leq S \leq M - P$ applies.

5. The method according to any one of the preceding claims, **characterized in that** the respectively coded subpulses (SP1, SP2) are received by different receiving lobes (B1, B2) by means of digital beam forming and then decoded.

6. The method according to one of the preceding claims, **characterized in that** the coding (COD) and/or decoding (DEC) of the subpulses (SP1, SP2) are carried out digitally, wherein the coding phases ($\phi_{en}$) and/or decoding phases ($\phi_{de}$) are preferably digitally stored within a lookup table (LT), which is accessed during coding (COD) and/or decoding (DEC).

7. The method according to one of the preceding claims, **characterized in that** the subpulses (SP1, SP2) within a respective pulse repetition interval (PRI) are at least partially sent simultaneously and/or at least partially at different times and/or at least partially comprise different polarisations.

8. The method according to one of the preceding claims, **characterized in that** the subpulses (SP1, SP2) at a respective pulse repetition interval (PRI) detect disjunct strips (SW) on the earth's surface with a width expansion in the range direction (y).

9. The method according to one of the claims 1 to 7, **characterized in that**, at a respective pulse repetition interval (PRI), the subpulses (SP1, SP2) sense the same strips or stripes overlapping in the range direction (y) on the earth's surface with a width expansion in the range direction (y).

10. The method according to claim 9, **characterized in that** interferometrically superimposed SAR images of the same area on the earth's surface are sensed by means of the received subpulses (SP1, SP2).

11. The method according to one of the preceding claims, **characterized in that** the decoding (DEC) of the subpulses (SP1, SP2) takes place in a ground station on the earth's surface.

12. A synthetic-aperture radar system for remotely sensing the earth's surface via a radar device (1), which moves during operation in an azimuth direction (x) across the earth's surface, wherein the radar device (1) comprises a sender device (2, 3) to send radar pulses and a receiver device (4) to receive radar echoes of the radar pulses in a range direction (y) perpendicular to the azimuth direction (x), wherein the synthetic-aperture radar system is configured such that it carries out a method during operation,
wherein at successively occurring pulse repetition intervals (PRI) radar pulses are sent by the sender device (2, 3) and radar echoes are received by the receiver device (4), wherein a plurality of radar pulses are sent in the form of subpulses (SP1, SP2) to the earth's surface at a continuous sending time interval (SI) of a respective pulse repetition interval (PRI) and the subpulses (SP1, SP2) are received as radar echoes at a continuous receiving interval (RI) subsequent to this, wherein the subpulses (SP1, SP2) in a pulse repetition interval are distinguished via different markings and identical subpulses (SP1, SP2) in different pulse repetition intervals (PRI) comprise the same markings, wherein a respective subpulse (SP1, SP2) is coded before sending by adding a coding phase ($\phi_{en}$), and a respectively received coded subpulse (SP1, SP2) is decoded by adding a decoding phase ($\phi_{de}$),
**characterized in that**
the addition of the coding phase ($\phi_{en}$) and the decoding phase ($\phi_{de}$) remains constant for the respective subpulses (SP1, SP2) within the respective pulse repetition interval (PRI) and across the pulse repetition intervals (PRI) and, for each pair of one subpulse (SP1, SP2) with one marking and one subpulse (SP1, SP2) with another marking, the addition of the decoding phase ($\phi_{de}$) for the subpulse (SP1, SP2) with the one marking and of the coding phase ($\phi_{en}$) for the subpulse (SP1, SP2) with the other marking varies from one pulse repetition interval (PRI) to the next, wherein the addition of the decoding phase ($\phi_{de}$) for the subpulse (SP1, SP2) with the one marking and of the coding phase ($\phi_{en}$) for the subpulse (SP1, SP2) with the other marking changes by the same amount from one pulse repetition interval (PRI) to the next.

13. The synthetic-aperture system according to claim 12, which is configured to carry out a method according to one of claims 2 to 11.

**Revendications**

1. Procédé radar à synthèse d'ouverture pour la télédétection de la surface terrestre via un dispositif radar (1) qui se déplace dans une direction d'azimut (x) au-dessus de la surface terrestre, dans lequel le dispositif radar (1) comprend un dispositif d'émission (2, 3) pour l'émission d'impulsions radar et un dispositif de réception (4) pour la réception d'échos radar des impulsions radar dans une direction de portée (y) perpendiculaire à la direction d'azimut (x), dans lequel des impulsions radar sont émises à intervalles de répétition d'impulsions (PRI) successifs par le dispositif d'émission (2, 3) et des échos radar sont réceptionnés par le dispositif de réception (4), dans lequel, dans un intervalle de temps d'émission contigu (SI) d'un intervalle de répétition d'impulsions (PRI) respectif, plusieurs impulsions radar sous forme de sous-impulsions (SP1, SP2) sont émises vers la surface terrestre et dans un intervalle de temps de réception (RI) contigu à la suite de celui-ci de l'intervalle de répétition d'impulsions (PRI) respectif, les sous-impulsions (SP1, SP2) sont réceptionnées en tant qu'échos radar, dans lequel les sous-impulsions (SP1, SP2) dans un intervalle de répétition d'impulsions (PRI) sont distinguées par des caractérisations différentes et des sous-impulsions (SP1, SP2) similaires dans différents intervalles de répétition d'impulsions (PRI) présentent la même caractérisation,
dans lequel une sous-impulsion (SP1, SP2) respective est codée avant l'émission en ce qu'elle est dotée d'une phase de codage ($\phi_{en}$) et une sous-impulsion (SP1, SP2) codée respective réceptionnée est décodée en ce qu'elle est dotée d'une phase de décodage ($\phi_{de}$),
**caractérisé en ce que**
l'addition de la phase de codage ($\phi_{en}$) et de la phase de décodage ($\phi_{de}$) pour des sous-impulsions respectives (SP1, SP2) dans l'intervalle de répétition d'impulsions (PRI) respectif et par-delà les intervalles de répétition d'impulsions (PRI) reste constante, et que pour chaque paire d'une sous-impulsion (SP1, SP2) avec une caractérisation et d'une sous-impulsion (SP1, SPE2) avec une autre caractérisation, l'addition de la phase de décodage ($\phi_{de}$) pour la sous-impulsion (SP1, SP2) avec la caractérisation et de la phase de codage ($\phi_{en}$) pour la sous-impulsion (SP1, SP2) avec l'autre caractérisation varie d'un intervalle de répétition d'impulsions (PRI) au suivant, dans lequel l'addition de la phase de décodage ($\phi_{de}$) pour la sous-impulsion (SP1, SP2) avec la caractérisation et de la phase de codage

($\phi_{en}$) pour la sous-impulsion (SP1, SP2) avec l'autre caractérisation change de l'ordre du même montant d'un intervalle de répétition d'impulsions (PRI) au suivant.

2. Procédé selon la revendication 1, **caractérisé en ce que** l'addition de la phase de décodage ($\phi_{de}$) pour la sous-impulsion (SP1, SP2) avec la caractérisation et de la phase de codage ($\phi_{en}$) pour la sous-impulsion (SP1, SP2) avec l'autre caractérisation change de l'ordre du même montant en sens inverse d'un intervalle de répétition d'impulsions (PRI) au suivant.

3. Procédé selon la revendication 1 ou 2, **caractérisé en ce que** le montant est de 180°.

4. Procédé selon l'une des revendications précédentes, **caractérisé en ce que** la phase de codage $\phi_{en}$ et la phase de décodage $\phi_{de}$ sont telles que suit :

$$\phi_{en}(n,i) = -\frac{180°}{M}(i - n + j)^2 \quad (\text{mod } 360°) \quad \text{avec} \quad n = 1, \ldots, P \quad \text{et} \quad j = 0 \text{ ou } j = 1,$$

$$\phi_{de}(n,i) = +\frac{180°}{M}(i - n + j - S)^2 \quad (\text{mod } 360°) \text{ ,}$$

dans lequel P est le nombre total des sous-impulsions (SP1, SP2) dans un intervalle de répétition d'impulsions (PRI) ;
dans lequel les sous-impulsions (SP1, SP2) sont caractérisées via une numérotation dans l'intervalle de répétition d'impulsions (PRI) et n est le numéro de la sous-impulsion (SP1, SP2) ;
dans lequel i est un numérateur séquentiel pour les intervalles de répétition d'impulsions successifs (PRI) ;
dans lequel $M$ est un entier, avec $M \geq P$ ;
dans lequel $S \in \mathbb{Z}$ est choisi de telle sorte que l'addition de la phase de codage ($\phi_{en}$) et de la phase de décodage ($\phi_{de}$) pour des sous-impulsions (SP1, SP2) respectives reste constante dans l'intervalle de répétition d'impulsions (PRI) respectif et par-delà les intervalles de répétition d'impulsions (PRI), dans lequel $0 \leq S \leq M$ s'applique de préférence.

5. Procédé selon l'une des revendications précédentes, **caractérisé en ce que** les sous-impulsions codées (SP1, SP2) respectives sont réceptionnées au moyen d'une formation de faisceau numérique par différents lobes de réception (B1, B2) et sont ensuite décodées.

6. Procédé selon l'une des revendications précédentes, **caractérisé en ce que** le codage (COD) et/ou le décodage (DEC) des sous-impulsions (SP1, SP2) est réalisé numériquement, dans lequel les phases de codage ($\phi_{en}$) et/ou les phases de décodage ($\phi_{de}$) sont de préférence enregistrées numériquement dans une table de correspondance (LT) à laquelle on accède dans le cadre du codage (COD) et/ou du décodage (DEC).

7. Procédé selon l'une des revendications précédentes, **caractérisé en ce que** les sous-impulsions (SP1, SP2) dans un intervalle de répétition d'impulsions (PRI) respectif sont émises au moins en partie de façon simultanée et/ou au moins en partie à des moments différents et/ou présentent au moins en partie des polarisations différentes.

8. Procédé selon l'une des revendications précédentes, **caractérisé en ce que** les sous-impulsions (SP1, SP2) dans un intervalle de répétition d'impulsions (PRI) respectif détectent des bandes disjointes (SW) sur la surface terrestre avec une extension en largeur dans la direction de portée (y).

9. Procédé selon l'une des revendications 1 à 7, **caractérisé en ce que** les sous-impulsions (SP1, SP2) dans un intervalle de répétition d'impulsions (PRI) respectif détectent les mêmes bandes superposées ou en direction de portée (y) sur la surface terrestre avec une extension en largeur en direction de portée (y).

10. Procédé selon la revendication 9, **caractérisé en ce que** des images RSO superposées de façon interférométrique de la même zone sur la surface terrestre sont déterminées au moyen des sous-impulsions (SP1, SP2) réceptionnées.

11. Procédé selon l'une des revendications précédentes, **caractérisé en ce que** le décodage (DEC) des sous-impulsions (SP1, SP2) s'effectue dans une station terrestre sur la surface terrestre.

**12.** Système radar à synthèse d'ouverture pour la télédétection de la surface terrestre avec un dispositif radar (1) lequel, lors du fonctionnement, se déplace dans une direction d'azimut (x) au-dessus de la surface terrestre, dans lequel le dispositif de radar (1) comprend un dispositif d'émission (2, 3) pour l'émission d'impulsions radar et un dispositif de réception (4) pour la réception d'échos radar des impulsions radar dans une direction de portée (y) perpendiculaire à la direction d'azimut (x), dans lequel le système radar à synthèse d'ouverture est réalisé de manière à ce que, lors du fonctionnement, un procédé soit mis en oeuvre avec lequel

à intervalles de répétition d'impulsions (PRI) successifs, des impulsions radar sont émises par le dispositif d'émission (2, 3) et des échos radar sont réceptionnés par le dispositif de réception (4), dans lequel, dans un intervalle de temps d'émission contigu (SI) d'un intervalle de répétition d'impulsions (PRI) respectif plusieurs impulsions radar sous forme de sous-impulsions (SP1, SP2) sont émises vers la surface terrestre et dans un intervalle de temps de réception contigu (RI) à la suite de celui-ci de l'intervalle de répétition d'impulsions (PRI) respectif, les sous-impulsions (SP1, SP2) sont réceptionnées en tant qu'échos radar, dans lequel les sous-impulsions (SP1, SP2) dans un intervalle de répétition d'impulsions (PRI) sont distinguées par des caractérisations différentes et des sous-impulsions (SP1, SP2) similaires dans différents intervalles de répétition d'impulsions (PRI) présentent la même caractérisation, dans lequel une sous-impulsion (SP1, SP2) respective est codée avant l'émission en ce qu'elle est dotée d'une phase de codage ($\phi_{en}$) et une sous-impulsion (SP1, SP2) codée respective réceptionnée est décodée en ce qu'elle est dotée d'une phase de décodage ($\phi_{de}$),

**caractérisé en ce que**

l'addition de la phase de codage ($\phi_{en}$) et de la phase de décodage ($\phi_{de}$) pour des sous-impulsions respectives (SP1, SP2) dans l'intervalle de répétition d'impulsions (PRI) respectif et par-delà les intervalles de répétition d'impulsions (PRI) reste constante, et que pour chaque paire d'une sous-impulsion (SP1, SP2) avec une caractérisation et d'une sous-impulsion (SP1, SP2) avec une autre caractérisation, l'addition de la phase de décodage ($\phi_{de}$) pour la sous-impulsion (SP1, SP2) avec la caractérisation et de la phase de codage ($\phi_{en}$) pour la sous-impulsion (SP1, SP2) avec l'autre caractérisation varie d'un intervalle de répétition d'impulsions (PRI) au suivant, dans lequel l'addition de la phase de décodage ($\phi_{de}$) pour la sous-impulsion (SP1, SP2) avec la caractérisation et de la phase de codage ($\phi_{en}$) pour la sous-impulsion (SP1, SP2) avec l'autre caractérisation change de l'ordre du même montant d'un intervalle de répétition d'impulsions (PRI) au suivant.

**13.** Système à synthèse d'ouverture selon la revendication 12, lequel est étudié pour la mise en oeuvre d'un procédé selon l'une des revendications 2 à 11.

Fig. 1

EP 3 060 939 B1

Fig. 3

Fig. 2

Fig. 4

Fig. 5

Fig. 6

Fig. 7

Fig. 8

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5808580 A

**In der Beschreibung aufgeführte Nicht-Patentliteratur**

- **GERHARD KRIEGER et al.** Multidimensional Waveform Encoding: A New and Digital Beamforming Technique for Sythetic Aperture Radar Remote Sensing. *IEEE Transaction on Geoscience and Remote Sensing,* 01. Januar 2008, vol. 46, 31-46

- **WEI XU et al.** MIMO-TOPS Mode for High-Resolution Ultra-Wide-Swath Full Polarimetric Imaging. *Progress In Electromagnetics Research,* 01. Januar 2001, vol. 121, 19-37
- **BO ZOU et al.** Design and performance analysis of orthogonal coding signal in MIMO-SAR. *Science China Information Sciences,* 03. Juni 2011, vol. 54 (8), 1723-1737